Europäisches Patentamt

European Patent Office

Office européen des brevets

(19)

(11) EP 1 270 607 A1

(12) **EUROPEAN PATENT APPLICATION**
published in accordance with Art. 158(3) EPC

(43) Date of publication:
02.01.2003 Bulletin 2003/01

(51) Int Cl.7: C08F 8/04, C08F 232/00,
C08G 61/06

(21) Application number: 01908149.6

(22) Date of filing: 28.02.2001

(86) International application number:
PCT/JP01/01511

(87) International publication number:
WO 01/064759 (07.09.2001 Gazette 2001/36)

(84) Designated Contracting States:
AT BE CH CY DE DK ES FI FR GB GR IE IT LI LU
MC NL PT SE TR
Designated Extension States:
AL LT LV MK RO SI

(30) Priority: 01.03.2000 JP 2000055514
30.03.2000 JP 2000093996
05.01.2001 JP 2001000440

(71) Applicants:
• TEIJIN LIMITED
Osaka-shi Osaka 541-0054 (JP)
• BAYER AG
51368 Leverkusen (DE)

(72) Inventors:
• HAGA, Hironori
Iwakuni-shi, Yamaguchi 740-0014 (JP)
• TAKEUCHI, Masaki
Iwakuni-shi, Yamaguchi 740-0014 (JP)
• MURAOKA, Takeshi
Matsuyama-shi, Ehime 791-8041 (JP)
• IWATA, Kaoru
Hachioji-shi, Tokyo 192-0914 (JP)

(74) Representative: Hallybone, Huw George et al
Carpmaels and Ransford,
43 Bloomsbury Square
London WC1A 2RA (GB)

(54) **PROCESS FOR PRODUCING HYDROGENATED UNSATURATED RING-CONTAINING HYDROCARBON POLYMER**

(57)     A process for producing a hydrogenation product of a ring-containing unsaturated hydrocarbon polymer, which product is low in the content of the heterogeneous catalyst used.

A ring-containing unsaturated hydrocarbon polymer is subjected to a hydrogenation reaction under hydrogen pressure in the presence of a heterogeneous catalyst in an inert solvent; a suspension containing the hydrogenated polymer obtained is fed into a hydro-cyclone by the hydrogen pressure applied to the reaction system; in the cyclone, the heterogeneous catalyst is separated and recovered and a hydrogenated polymer low in heterogeneous catalyst content is produced.

FIG. 1

**Description**

Technical Field

The present invention relates to a process for producing a hydrogenation product of a ring-containing unsaturated hydrocarbon polymer. More particularly, the present invention relates to a process for producing a hydrogenation product of a ring-containing unsaturated hydrocarbon polymer, very low in catalyst content.

Prior Art

Hydrogenation products of ring-containing unsaturated hydrocarbon polymers, having bulky, cyclic hydrocarbon group in the main chain and/or side chain are synthetic resins superior in transparency, heat resistance, chemical resistance, moisture resistance, dielectric property and mechanical properties, and are in wide use in various application fields. Having bulky, cyclic hydrocarbon group in the main chain and/or side chain, they are amorphous and highly transparent and are in use as an important optical material.

Examples of ring-containing unsaturated hydrocarbon polymers, as the precursors of these hydrogenated polymers include addition copolymers, ring-opening polymers and styrene polymers having aromatic group in the side chain.

The addition polymers are generally obtained by subjecting, to addition polymerization, a cyclic olefin or a cyclic diene and ethylene or an $\alpha$-olefin. When a cyclic diene is used as a monomer in the addition polymerization, the resulting polymer contains C=C double bond, resulting with lowering heat resistance, oxidation stability, light resistance and weather resistance. It is known that hydrogenation of the double bond for its saturation can prevent such drawbacks.

The ring-opening polymers are a group of polymers obtained by polymerizing a cyclic olefin using a so-called metathesis catalyst. These polymers contain C=C double bond inevitably because of the nature of the polymerization mechanism. Therefore, hydrogenation of the double bond for its saturation is preferred for the same reason as for the addition copolymers of a cyclic diene and ethylene or an $\alpha$-olefin.

The styrene polymers are in wide use as a general-purpose resin. However, they are not sufficient in heat resistance and weather resistance. Therefore, it has been proposed to hydrogenate the aromatic group contained in the polymer to convert the polymer into a vinylcyclohexane polymer.

In the hydrogenation reaction of the above-mentioned ring-containing unsaturated hydrocarbon polymers, a homogeneous catalyst or a heterogeneous catalyst is used generally. A heterogeneous catalyst, which is easy in catalyst separation as compared with a homogeneous catalyst, is used often. As the apparatus for catalyst separation, there are mentioned a filtration apparatus using a filter, and a mechanical centrifuge.

With the former apparatus, however, a catalyst deposits gradually on the filter and its filtration capability decreases accordingly; therefore, a step of filter regeneration is necessary. With an apparatus of commercial scale, in particular, a relatively large amount of a catalyst is used since the catalyst is a heterogeneous catalyst, whereby the amount of the catalyst to be separated is very large; therefore, the filtration apparatus inevitably becomes high in number and large in size and the times of filter regeneration step such as shaking-down or back-washing of catalyst on filter increase, which adversely affect the production cost of hydrogenated polymer.

The latter apparatus can separate a catalyst continuously; however, having a driving section, it tends to cause mechanical trouble, requires periodical maintenance, and the two apparatus must be used always in parallel. Further, the apparatus has a big drawback that the direct introduction of a high-pressure liquid (e.g. a reaction mixture after hydrogenation) into the apparatus is impossible. Furthermore, the apparatus per se is very costly, which also adversely affects the production cost of hydrogenated polymer.

Meanwhile, a hydro-cyclone has merits that it has no moving section and is free from mechanical trouble, that since it is small-sized and has a simple structure, it can be produced at a low cost, and that it has a large treating capacity for the small size. On the other hand, it has a demerit that an expensive slurry pump of high lift (0.5 to 2 kgf/cm$^2$) is needed.

Disclosure of the Invention

An object of the present invention is to overcome the problems existing in the conventional step of separation and recovery of heterogeneous catalyst and provide a process for producing a hydrogenation product of a ring-containing unsaturated hydrocarbon polymer, in which the content of heterogeneous catalyst is greatly reduced.

Other object of the present invention is to provide a process for efficiently producing a hydrogenation product of a ring-containing unsaturated hydrocarbon polymer, in which the content of heterogeneous catalyst is greatly reduced.

Still other object of the present invention and the advantages of the present invention will become apparent from the following description.

The above objects and advantages of the present invention are achieved by a process for producing a hydrogenated polymer, which comprises subjecting a ring-containing unsaturated hydrocarbon polymer containing, in the main recurring unit, at least one aliphatic carbon-carbon double bond and/or at least one aromatic hydrocarbon group, to a hydrogenation reaction under a hydrogen pressure in the presence of a heterogeneous catalyst in an inert solvent, feeding, by the hydrogen pressure used in the hydrogenation reaction, a suspension containing the obtained hydrogenated polymer and the heterogeneous catalyst into a hydro-cyclone, and separating and recovering, in the hydro-cyclone, the heterogeneous catalyst from the suspension and recovering the hydrogenated polymer in the form of a solution in the inert solvent.

Brief Description of the Drawings

Fig. 1 is a schematic drawing showing an example of the apparatuses used for carrying out the production process of the present invention.

Fig. 2 is a schematic drawing showing other example of the apparatuses used for carrying out the production process of the present invention.

Fig. 3 is a schematic drawing showing other example of the apparatuses used for carrying out the production process of the present invention.

Fig. 4 is a schematic drawing of a cone-shaped hydro-cyclone. In Fig. 4, (a) shows a plan view and (b) shows a sectional view.

Fig. 5 shows the shape of the hydro-cyclone used in Examples. In Fig. 5, (a) shows a plan view and (b) shows a sectional view.

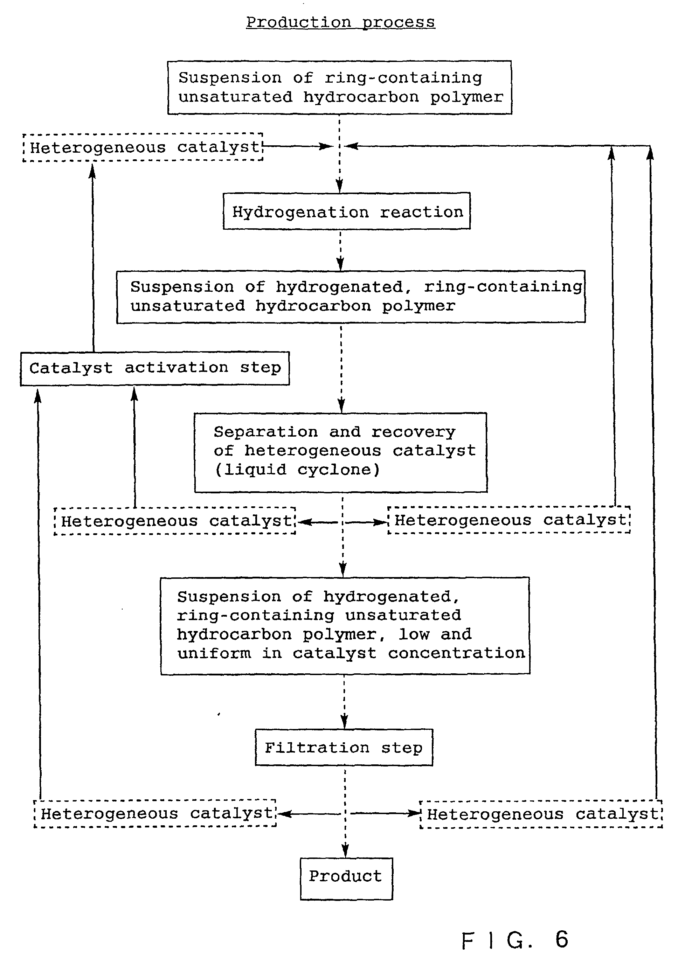

Fig. 6 is a flow chart explaining an example of the production process of the present invention.

Detailed Description of the Invention

In the present invention, the ring-containing unsaturated hydrocarbon polymer comprises mainly the monomer unit, containing at least one aliphatic carbon-carbon double bond and/or at least one aromatic hydrocarbon group in a recurring unit. As representative examples of such a ring-containing unsaturated hydrocarbon polymer, there can be mentioned an addition polymer, a ring-opening polymer and a styrene polymer.

The addition polymer can be obtained generally by copolymerizing a cyclic diene and ethylene or an $\alpha$-olefin. Such a polymer is disclosed in JP-A-60-168708, JP-A-61-115916, JP-A-61-221206, JP-A-61-292601, etc. As the cyclic diene, there are preferably used, for example, hydrocarbon cyclic dienes such as cyclopentadiene, dicyclopentadiene, norbornadiene, 5-ethylidenenorbornene, 8-ethylidenetetracyclo[4.4.0.1$^{2,5}$.1$^{7,10}$]-3-dodecene, 8-isopropylidenetetracyclo[4.4.0.1$^{2,5}$.1$^{7,10}$]-3-dodecene and the like. Of these, norbornadiene, 8-ethylidenetetracyclo[4.4.0.1$^{2,5}$.1$^{7,10}$]-3-dodecene and dicyclopentadiene are particularly preferred in view of the availability of the raw materials and the heat resistance of the polymer obtained. As necessary, a cyclic olefin may be used in combination, in an amount of 30% or less of the cyclic diene. As such a cyclic olefin, there can be preferably mentioned hydrocarbon cyclic olefins such as norbornene, tetracyclo[4.4.0.1$^{2,5}$.1$^{7,10}$]-3-dodecene. As the $\alpha$-olefin used in

the present invention, there can be mentioned, for example, propylene, 1-butene, 1-pentene, 1-hexene, 1-octene and 1-decene, all having 3 or more carbon atoms. As the monomer copolymerized with the cyclic olefin and the cyclic diene, ethylene is most preferred from the reactivity, with propylene being also preferred. These $\alpha$-olefins may be used alone or in combination of two kinds or more. The addition polymer can generally be synthesized easily in the presence of a Ziegler catalyst or a metallocene catalyst.

The ring-opening polymer used in the present invention can be obtained generally by polymerizing a cyclic olefin or a cyclic diene in the presence of a metathesis catalyst. Such a polymer is disclosed in JP-A-60-26024, JP-A-63-218726, JP-A-2-133413, JP-A-3-109418, etc. As the monomer, there are preferably used, for example, hydrocarbon cyclic olefins such as norbornene, 5-phenylnorbornene and tetracyclo[4.4.0.1$^{2,5}$.1$^{7,10}$]-3-dodecene, and hydrocarbon cyclic dienes such as dicyclopentadiene, norbornadiene, 5-ethylidenenorbornene, 5-isopropylidenenorbornene, 8-ethylidenetetracyclo[4.4.0.1$^{2,5}$.1$^{7,10}$]-3-dodecene and 8-isopropylidenetetracyclo[4.4.0.1$^{2,5}$.1$^{7,10}$]-3-dodecene. Unlike the addition polymer, the ring-opening polymer inevitably contains carbon-carbon double bond. Polymers having carbon-carbon double bond are inferior in thermal and chemical stability and are unsuited for practical applications. Therefore, the ring-opening polymer must be hydrogenated in the presence of a hydrogenation catalyst.

As another group of the ring-containing unsaturated hydrocarbon polymer used in the present invention, a styrene homopolymer and a styrene copolymer are mentioned. As the styrene monomer used in the styrene polymers, there are mentioned, for example, styrene, $\alpha$-methylstyrene, p-methylstyrene and vinylnaphthalene. Of these, styrene is used most preferably for the availability and the properties of the final polymer obtained. Meanwhile, as the copolymerization component, there are preferably used, for example, hydrocarbon conjugated dienes such as butadiene, isoprene and 2,3-dimethylbutadiene. By introducing such a copolymerization component, it is possible to obtain an intended hydrogenated polymer significantly improved in dynamic properties without impairing the transparency of the polymer. As the amount of the copolymerization component introduced, there is mentioned 30% by weight or less, preferably 20% by weight or less relative to the weight of the styrene monomer. Introduction of an amount more than that is not preferred because the heat resistance and transparency of the hydrogenated polymer obtained are impaired. Such a styrene polymer can be obtained by subjecting a corresponding styrene monomer to any of radical polymerization, anionic polymerization, cationic polymerization and coordination anionic polymerization. When, in particular, a polymer having a wide molecular weight distribution is obtained, radical polymerization is used preferably and, when a polymer having a narrow molecular weight distribution is obtained, anionic polymerization is used preferably. When a copolymer between styrene and diene is obtained, anionic polymerization is used preferably. As the copolymer obtained, either of a random copolymer and a block copolymer may be used; however, a block copolymer is used preferably for the heat resistance. There are also used preferably a radial block copolymer with star-like branches and a graft copolymer.

The molecular weight of the ring-containing unsaturated hydrocarbon polymer used in the present invention is an important index determining the mechanical properties of an intended hydrogenated polymer. The molecular weight of the ring-containing unsaturated hydrocarbon polymer is preferably 30,000 to 1,000,000, more preferably 50,000 or more, further preferably 80,000 to 400,000 in terms of the polystyrene-reduced weight-average molecular weight (Mw) as measured by GPC (gel permeation chromatography). An average molecular weight of less than 30,000 is not preferred because it gives a hydrogenated polymer insufficient in mechanical properties, and an average molecular weight of more than 1,000,000 is not preferred, either, because it incurs too high a melt viscosity and insufficient fluidity and makes molding difficult. When the molecular weight of the ring-containing unsaturated hydrocarbon polymer is expressed by another yardstick of molecular weight, i.e. reduced viscosity, the reduced viscosity $\eta$sp/c as measured at 30°C in a toluene solution of a 0.5 g/dL concentration is 0.1 to 10 dL/g, preferably 0.3 to 3 dL/g, more preferably 0.4 to 2.0 dL/g.

In the present invention, such a ring-containing unsaturated hydrocarbon polymer is subjected to hydrogenation under a hydrogen pressure in the presence of a heterogeneous catalyst in an inert solvent, to produce a hydrogenated polymer. The hydrogenation reaction is described in detail below.

As the heterogeneous catalyst used in the present invention, there are mentioned, for example, metals such as nickel, cobalt, ruthenium, rhodium, platinum and palladium; and oxides, salts, and complexes thereof. There are further mentioned the heterogeneous catalysts carried the above catalyst on a porous carrier such as active carbon, diatomaceous earth, silica or alumina. Of these, preferred are at least one metal selected from the group consisting of nickel, platinum, palladium, ruthenium and rhodium, or an oxide, salt, or complex thereof; and a solid catalyst carried, on a porous carrier, at least one metal selected from the group consisting of nickel, platinum, palladium, ruthenium and rhodium, or an oxide, salt, or complex thereof.

Particularly preferred is a catalyst carried Raney nickel, Raney cobalt, stabilized nickel, nickel, ruthenium, rhodium, palladium or platinum on silica, alumina or silica-alumina.

As the inert solvent used in the present invention, there are preferably used those solvents which dissolve the ring-containing unsaturated hydrocarbon polymer as a raw material and the hydrogenated polymer as a product thereof, does not give rise to any undesirable side reaction in the hydrogenation reaction, and does not deactivate the catalyst used. As such a solvent, a hydrocarbon solvent is used preferably. Specifically, there are mentioned, for example, aliphatic saturated hydrocarbons such as pentane, hexane, heptane and octane; alicyclic saturated hydrocarbons such as cyclopentane, methylcyclopentane, cyclohexane, methylcyclohexane, cyclooctane and decalin; and benzene, toluene, xylene, ethylbenzene and tetralin. These solvents may be used alone or in combination of two or more kinds. Of these, preferred are, viewed from the solubility and the reactivity in the hydrogenation reaction, aliphatic saturated hydrocarbons and alicyclic saturated hydrocarbons; and particularly preferred are hexane, heptane, cyclohexane, methylcyclohexane and decalin. In order to prevent the side reaction and carry out the hydrogenation reaction smoothly, it is possible to use, in combination, a polar solvent such as ether or alcohol. As such a solvent, there are preferably used, for example, chain or cyclic ethers such as ethyl ether, diisopropyl ether, dibutyl ether, methyl tert-butyl ether, tetrahydrofuran, dioxane and 1,3-dioxolane; and aliphatic or alicyclic alcohols such as methanol, ethanol, isopropanol, n-butanol, isobutanol and cyclohexanol.

In the present invention, the concentration of the ring-containing unsaturated hydrocarbon polymer in the hydrogenation reaction system is, for example, 4% by weight to 40% by weight, preferably 5% by weight to 30% by weight, more preferably 10% by weight to 25% by weight. A concentration of less than 4% by weight is not preferred because it tends to incur a reduction in productivity. A concentration of higher than 40% by weight is not preferred, either, because the hydrogenated polymer obtained tends to precipitate and the reaction mixture tends to have a high viscosity, making smooth stirring impossible.

The hydrogenation reaction is carried out at a high temperature at a high pressure. The temperature used differs depending upon the catalyst and hydrogenation pressure used, but is preferably 100°C to 250°C, more preferably 150°C to 200°C. When the temperature is lower than 100°C, the reaction hardly proceeds smoothly and, when the temperature is higher than 250°C, a side reaction and a reduction in molecular weight tend to occur; therefore, such temperatures are not preferred. The hydrogen pressure used is preferably 50 to 250 kgf/cm$^2$, more preferably 80 to 200 kgf/cm$^2$. When the pressure is lower than 50 kgf/cm$^2$, the reaction hardly proceeds smoothly and, when the pressure is higher than 200 kgf/cm$^2$, there is a restriction to the equipment used and there is little effect by an increased pressure. The reaction time differs depending upon various parameters such as polymer concentration, activity and concentration of catalyst, temperature, hydrogen pressure and agitation efficiency, but is, for example, 0.5 hour to 50 hours, preferably 1 hour to 20 hours, more preferably 1.5 hours to 10 hours.

The thus-obtained hydrogenated polymer has a hydrogenation degree of, for example, 90% or more, preferably 95%, more preferably 99% or more.

In the present invention, the thus-obtained suspension containing a hydrogenated polymer is then fed into a hydro-cyclone by the hydrogen pressure applied to the reaction system; in the hydro-cyclone, the heterogeneous catalyst is separated and recovered and a hydrogenated polymer reduced in heterogeneous catalyst content is obtained. Description is made below on the step of separating and recovering the heterogeneous catalyst using the hydro-cyclone.

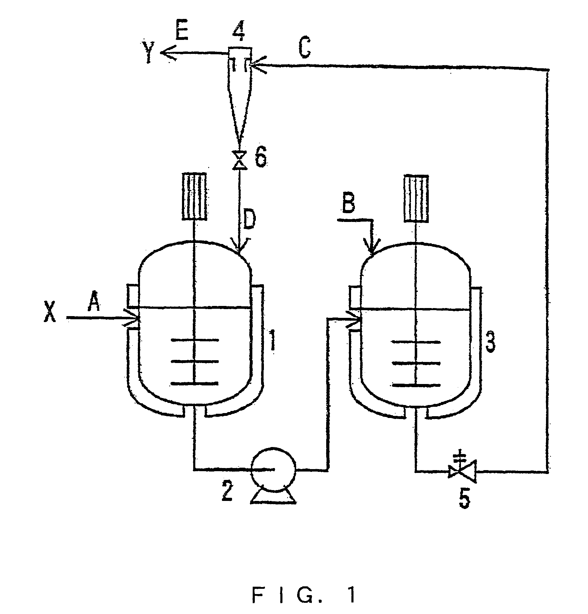

Examples of the apparatus for carrying out a hydrogenation process using a hydro-cyclone are shown in Figs. 1 to 3. In Figs. 1, 2 and 3, 1 is an agitation tank; 2 is a pump; 3 is a hydrogenation reactor; 4 is a hydro-cyclone for catalyst cycle; 5 is a pressure control valve; 6 is a flow amount ratio control valve; 7 is a flow amount control valve; 8 is a hydro-cyclone for catalyst activation; 9 is a recovered catalyst storage tank; A is a suspension of ring-containing unsaturated hydrocarbon polymer; B is hydrogen; C is an original suspension of hydrogenated polymer; $C_1$ is a suspension of hydrogenated polymer in catalyst cycle system; $C_2$ is a suspension of hydrogenated polymer in catalyst activation system; D is an underflow (high catalyst concentration) suspension in catalyst cycle system; $D_1$ is an underflow (high catalyst concentration) suspension in catalyst cycle system; $D_2$ is an underflow (high catalyst concentration) suspension in catalyst activation system; E is an overflow (low concentration) suspension in catalyst cycle system; $E_1$ is an overflow (low concentration) suspension in catalyst cycle system; $E_2$ is an overflow (low concentration) suspension in catalyst activation system; F is a catalyst suspension after activation and regeneration; X is an ring-containing unsaturated hydrocarbon polymer and an inert solvent; Y is a filtration step; and Z is a catalyst activation step.

An example of the apparatus for carrying out a hydrogenation process using a hydro-cyclone is shown in Fig. 1. This apparatus consists mainly of an agitation tank 1, a hydrogenation reactor 3 and a hydro-cyclone 4. The hydrogenated polymer suspension after hydrogenation reaction (the suspension is hereinafter referred to as original suspension) is subjected to hydrogen pressure control by a pressure control valve 5 and is fed into a hydro-cyclone 4 under pressure. By the hydro-cyclone, the original suspension is separated into a suspension low in catalyst content (overflow suspension) E and a suspension high in catalyst content (underflow suspension) D. The overflow suspension is as necessary fed to a filtration step Y under pressure. Meanwhile, from the underflow suspension containing a large amount of the catalyst, the heterogeneous catalyst can be separated and recovered by a known method. Or, the separated and recovered heterogeneous catalyst or the underflow suspension containing a large amount of the heterogeneous catalyst can be transferred in whole to the agitation tank as it is and further be returned to the hydrogenation reactor for reuse in hydrogenation reaction. It is also possible to transfer part or the whole thereof to a catalyst activation step Z for activation and regeneration, then transfer to the agitation tank and return to the hydrogenation reactor for use in hydrogenation reaction. Of course, it is possible that no activation or regeneration is made and instead a fresh catalyst is used.

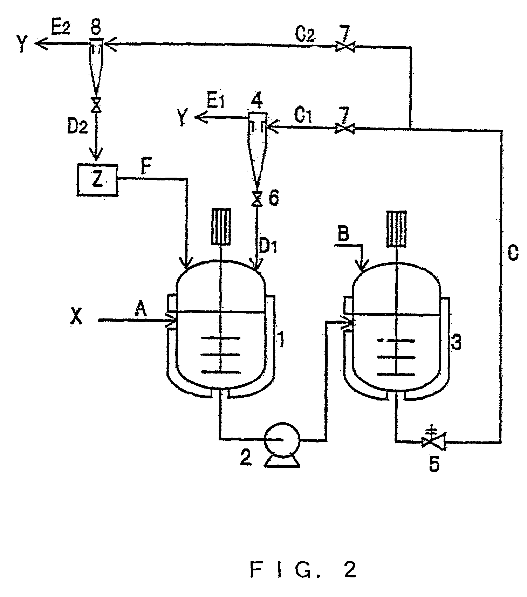

Other example of the apparatus for carrying out a hydrogenation process using a hydro-cyclone is shown in Fig. 2. The process consists mainly of an agitation tank 1, a hydrogenation reactor 3 and hydro-cyclones 4 and 8. A suspension C containing a ring-containing unsaturated hydrocarbon polymer after and during hydrogenation reaction and a heterogeneous catalyst (the suspension is hereinafter referred to as original suspension) is subjected to hydrogen pressure control by a pressure control valve 5; and at least part thereof (suspension $C_1$) is fed into a hydro-cyclone 4 under pressure (catalyst cycle step). By the hydro-cyclone 4, the suspension $C_1$ is separated into a low-concentration suspension (overflow suspension) $E_1$ and a high-concentration suspension (underflow suspension) $D_1$. The overflow suspension $E_1$ is as necessary fed to a filtration step Y under pressure, and the underflow suspension $D_1$ high in catalyst concentration is returned to the agitation tank 1. Meanwhile, other part $C_2$ of the original suspension C sent from the hydrogenation reactor 3 via the pressure control valve 5 is fed into the hydro-cyclone 8 under pressure and is separated into a low-concentration suspension (overflow suspension) $E_2$ and a high-concentration suspension (underflow suspension) $D_2$. The overflow suspension $E_2$ is as necessary fed to a filtration step Y under pressure. The underflow suspension $D_2$ high in catalyst concentration is transferred to a catalyst activation step Z for activation and regeneration. The catalyst suspension F after activation and regeneration is returned to the agitation tank 1. Of course, it is possible that no activation or regeneration is made and instead a fresh catalyst is used.

Description is made below on preferred embodiments of the process using the apparatus of Fig. 2.

(1) Batch process (1)

After the completion of hydrogenation reaction, the whole of an original suspension C is fed to a catalyst cycle step. When the catalyst activity has decreased to a base level or lower, the whole of the original suspension C is fed to a catalyst activation step Z for catalyst activation and regeneration. Such a case is suitable when the catalyst used has a long life. The activated and regenerated catalyst is mixed with a ring-containing unsaturated hydrocarbon polymer solution in the agitation tank 1. Since the catalysts contained in the overflow suspensions $E_1$ and $E_2$ of a hydro-cyclone 4 for catalyst cycle and a hydro-cyclone 8 for catalyst activation, respectively, are removed out of the reaction system, make-up for the removed catalyst must be made in the agitation tank 1.

(2) Batch process (2)

After the completion of hydrogenation reaction, part ($C_1$) of an original suspension C is fed to a catalyst cycle step, and other part ($C_2$) is fed to a catalyst activation step Z. The distribution ratio is determined in view of the extent of catalyst deactivation. Such a case is suitable when the catalyst used has a short life. In an extreme case thereof, that is, when the catalyst life is very short, the whole of the original suspension is fed to the catalyst activation step Z for catalyst activation and regeneration, in each batch. The activated and regenerated catalyst is mixed with a ring-containing unsaturated hydrocarbon polymer solution in the agitation tank 1. Since the catalysts contained in the overflow suspensions $E_1$ and $E_2$ of a hydro-cyclone 4 for catalyst cycle and a hydro-cyclone 8 for catalyst activation, respectively, are removed out of the reaction system, make-up for the removed catalyst must be made in the agitation tank 1.

(3) Continuous process

An original suspension C after hydrogenation reaction is continuously distributed and fed under pressure to a catalyst cycle step and a catalyst activation step Z. Of the suspension $C_1$ fed to the catalyst cycle step, the overflow suspension $E_1$ is as necessary fed to a filtration step Y continuously, and the underflow suspension $D_1$ is returned to an agitation tank 1 continuously as it is. Of the suspension $C_2$ fed to the catalyst activation step Z, the overflow suspension $E_2$ is as necessary fed to a filtration step Y continuously. Meanwhile, the underflow suspension $D_2$ is fed to a catalyst activation step Z continuously for catalyst activation and regeneration and then is fed into the agitation tank 1 continuously. The distribution ratio of $C_1$ and $C_2$ is determined in consideration of the life of the catalyst used. Make-up for the removed catalyst is made in the same manner as in the batch processes but continuously.

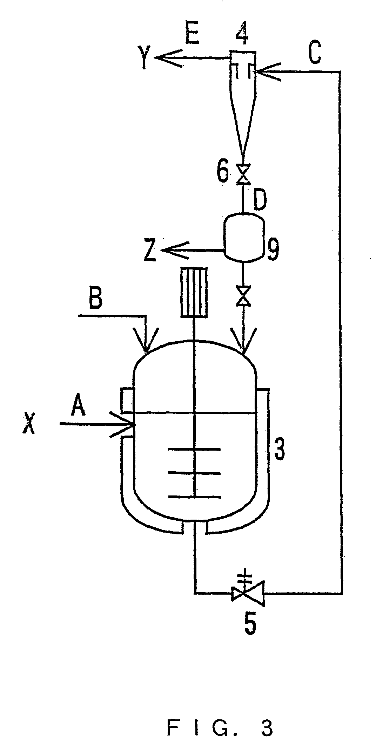

Other example for carrying out a hydrogenation process using a hydro-cyclone is shown in Fig. 3. This process consists mainly of a hydrogenation reactor 3 and a hydro-cyclone 4. A hydrogenated, ring-containing unsaturated hydrocarbon polymer suspension C obtained after hydrogenation reaction (the suspension is hereinafter referred to as original suspension) is subjected to hydrogen pressure control by a pressure control valve 5 and is fed into a hydro-cyclone 4 under pressure. By the hydro-cyclone, the original suspension is separated into a suspension low in catalyst content (overflow suspension) E and a suspension high in catalyst content (underflow suspension) D. The overflow suspension is as necessary fed to a filtration step Y under pressure. Meanwhile, the underflow suspension containing a large amount of a catalyst is once stored in a recovered catalyst storage tank 9. The suspension in this tank can be returned as it is to the hydrogenation reactor for reuse in hydrogenation reaction. Or, it is possible that the suspension in the storage tank is not returned to the hydrogenation tank as it is and is subjected to separation and recovery of heterogeneous catalyst by a known method. The separated and recovered catalyst is transferred to a catalyst activation step Z for activation and regeneration and then is returned to the hydrogenation reactor for use in hydrogenation reaction. When the separated and recovered catalyst has a high catalytic activity, it can be returned as it is to the hydrogenation reactor without being activated and regenerated. Or, it is possible that no activation or regeneration is made and instead a fresh catalyst is used.

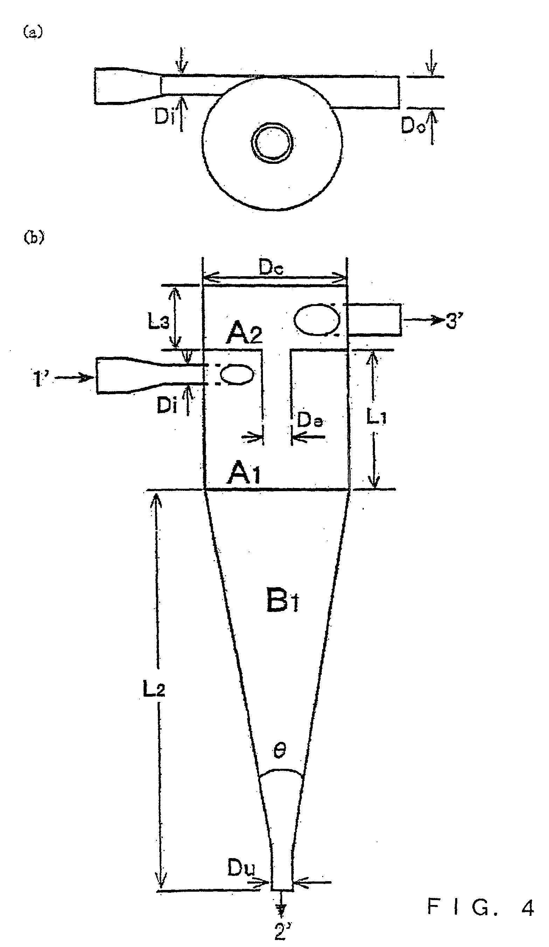

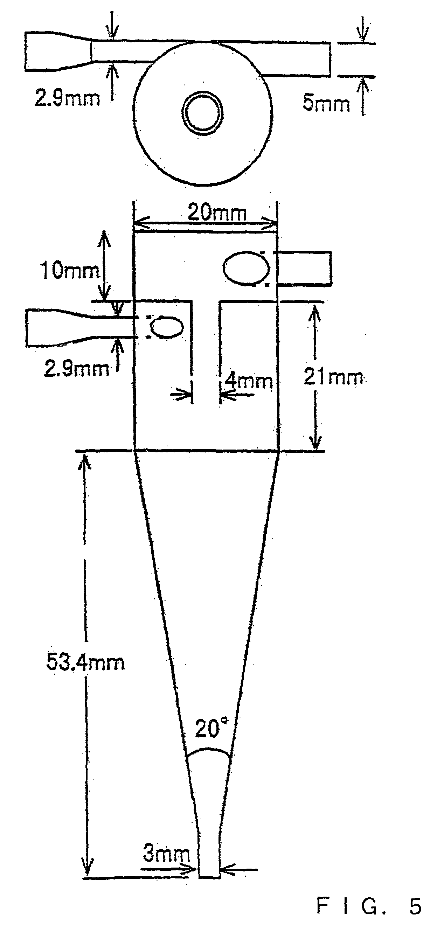

Next, examples of the hydro-cyclone suitably used in the present invention are shown in Fig. 4 and Fig. 5. In Fig. 4, Dc is the diameter of a hydro-cyclone; 1' is an inlet of original suspension; 2' is an outlet of underflow (high catalyst concentration) suspension; 3' is an outlet of overflow (low catalyst concentration) suspension; $A_1$ is a lower cylindrical section; $A_2$ is an upper cylindrical section; and $B_1$ is a conical section.

In the present invention, there is no particular restriction as to the hydro-cyclone used; in general, however, there is preferably used a cone type hydro-cyclone comprising a cylindrical section (comprising $A_1$ and $A_2$) and a conical section ($B_1$), such as shown in Fig. 4. An original suspension is fed under pressure from the inlet 1' of hydro-cyclone into the lower cylindrical section ($A_1$) of hydro-cyclone. The catalyst in the suspension moves downward along the inner wall of the hydro-cyclone lower cylinder section and the inner wall of the conical section owing to the centrifugal force and gravity applied to the suspension, is collected at the bottom of the conical section, and leaves the hydro-cyclone from the outlet 2' of underflow suspension. Meanwhile, the overflow suspension of reduced catalyst concentration is pushed upward from the lower cylindrical section ($A_1$) to the upper cylindrical section ($A_2$) and then leaves the hydro-cyclone from the outlet 3' of overflow suspension.

The diameter (Dc) of the cone type hydro-cyclone used in the present invention is determined in view of the required catalyst separation efficiency, treating capability, etc. In general, the diameter (Dc) is, for example, 10 to 500 mm, preferably 20 to 250 mm, more preferably 100 to 250 mm. A diameter larger than 500 mm is not preferred because the centrifugal force of hydro-cyclone which is a driving force for catalyst separation does not sufficiently act on the heterogeneous catalyst used and the separation capability of hydro-cyclone for heterogeneous catalyst is low. A diameter smaller than 10 mm is not preferred, either, because the treating capability of hydro-cyclone is not sufficient. The vertex angle (θ) of the conical section is selected in a range of, for example, 6° to 40°, preferably 10° to 30°. A vertex angle of more than 40° is not preferred because the heterogeneous catalyst separated on the conical section inner wall flows toward the outlet of underflow suspension in a large amount to make difficult the outflow of the catalyst, thereby reducing the separation efficiency of the catalyst. When the vertex angle is less than 6°, the length ($L_2$) of the conical section is large, the hydro-cyclone is inevitably large-sized, and the heterogeneous catalyst plugs the vertex angle portion of the cone. Therefore, a vertex angle of smaller than 6° has no meaning. The length ($L_1$) of the lower cylindrical section is, for example, 0.5Dc to 5Dc, preferably Dc to 3.5Dc. When the length is larger than 5Dc, the heterogeneous catalyst to be separated in the conical section is separated at the inner wall of cylindrical section. The thus-separated catalyst deposits on the cylindrical section inner wall and then scatters again, with result of reducing the separation efficiency of catalyst. When the length is smaller than the above value, there appears, in the cylindrical section, no sufficient flow of liquid in its circumferential direction and, therefore, no sufficient centrifugal force acts on the heterogeneous catalyst, resulting in inferior separation efficiency. Therefore, such diameters are not preferred. In the present invention, it is preferred that at least 70% by weight of the heterogeneous catalyst contained in the suspension is separated and recovered in the hydro-cyclone.

The dimensions of $L_1$ and other parts (parts of Fig. 4 shown by $L_2$, De, Di, Do and Du) are generally as follows, but are not restricted thereto in the present invention.

$L_1$ = Dc/2 to 5Dc,
$L_2$ = Dc/2 to Dc,
De = Dc/6 to Dc/4,
Di = Dc/8 to Dc/2,
Do = Dc/6 to Dc/3,
Du = Dc/7 to Dc/10, and
θ = 6° to 40°

The heterogeneous catalyst used in the hydrogenation reaction of the present invention has a mass base median diameter of preferably 1 μm or more, more preferably 10 μm or more. In order to separate and recover particles of smaller diameters in a hydro-cyclone, the hydro-cyclone needs to have a smaller diameter; however, with a hydro-cyclone of smaller diameter, its treating capability is lower and the pressure loss is larger, thereby tending to incur a larger energy loss.

The difference between the true density of the heterogeneous catalyst and the density of the solution of hydrogenated polymer in inert solvent, or when the heterogeneous catalyst is porous, the difference between the density of the porous heterogeneous catalyst when the weight of the solution of hydrogenated polymer in inert solvent penetrated into the pores of the porous heterogeneous catalyst, has also been taken into consideration, i.e. the apparent density of the porous heterogeneous catalyst and the density of the solution of hydrogenated polymer in inert solvent, is preferably 0.01 g/cm$^3$ or more, more preferably 0.1 g/cm$^3$ or more. Herein, the apparent density of catalyst refers to the density of a heterogeneous catalyst of porous and particulate form when a hydrogenated polymer solution penetrated into the pores of the catalyst has also been considered. When the weight of the catalyst is taken as Wc, the true density of the catalyst is taken as ρc, the weight of the hydrogenated polymer solution penetrated into the pores of the catalyst is taken as Ws, and the density of the hydrogenated polymer solution is taken as ρs, the apparent viscosity ρs of the catalyst is represented by the following formula.

$$\rho a = (Wc + Ws)/(Wc/\rho c + Ws/\rho s)$$

When the difference between the true density of the catalyst or the apparent density of the catalyst and the density of the hydrogenated polymer solution is less than 0.01 g/cm$^3$, the difference between the centrifugal force acting on the catalyst and the centrifugal force acting on the solution is small, whereby the separation capability of cyclone is low. Therefore, in order to carry out the separation and recovery of such a catalyst in a hydro-cyclone, it is necessary to make very small the diameter of the cyclone; the pressure loss in the hydro-cyclone is large; and the energy efficiency is low.

In the present invention, the suspension introduced into the hydro-cyclone has a catalyst concentration of preferably 60% by weight or less, more preferably 50% by weight or less, further preferably 20% by weight or less. The catalyst concentration of more than 60% by weight is not preferred because the deposition amount of the heterogeneous catalyst separated and recovered in hydro-cyclone tends to be too large and the catalyst once separated from the suspension is scattered again, resulting in reduced separation capability of hydro-cyclone.

In the present invention, the hydrogenated polymer solution contained in the original suspension has a viscosity of preferably 500 cp or less, more preferably 100 cp or less, further preferably 50 cp or less. The viscosity more than that is not preferred because the heterogeneous catalyst receives a larger resistance from the suspension and is separation from the suspension is harder. In the most preferred embodiment, the original suspension obtained from the hydrogenation reaction is used as it is without being diluted or concentrated.

In the present invention, the original suspension is fed into a hydro-cyclone by the hydrogen pressure used in the hydrogenation reaction. The hydrogen pressure used in the hydrogenation is a high pressure as mentioned previously. Therefore, in catalyst separation from the suspension using a hydro-cyclone, no further pressurization is needed. In many cases, the suspension is subjected to pressure reduction and then fed into the hydro-cyclone under pressure. The pressure reduction may be conducted by considering the relation between the vapor pressure of the solvent used and the operating temperature employed. Arbitrary pressure reduction is not preferred because it may incur the vaporization of the solvent depending upon the operating temperature. The hydrogen pressure used is preferably 0.5 to 250 kgf/cm$^2$, more preferably 5 to 200 kgf/cm$^2$. The hydrogen pressure of higher than 250 kgf/cm$^2$ is not preferred because such a pressure imposes a restriction on the equipment used. The hydrogen pressure of lower than 0.5 kgf/cm$^2$ is not preferred, either, because such a pressure is insufficient and unable to feed the suspension into the hydro-cyclone at a sufficient flow rate.

In the present invention, a mass base flow amount ratio is mentioned as an important parameter for determining the separation efficiency and treating capability of hydro-cyclone. The flow amount ratio f is defined as f = $V_1$/($V_1$+$V_2$) when the mass base flow amounts per unit time (kg/hr) of overflow suspension and underflow suspension are taken as $V_1$ and $V_2$, respectively. In general, a larger f results in a larger treating capability but a lower separation efficiency. A smaller f results in a higher separation efficiency but a smaller treating capability. The range of f differs depending upon the difference between the apparent density $\rho a$ of catalyst and the density of hydrogenated polymer solution, the viscosity of hydrogenated polymer solution, the particle diameter and its distribution of catalyst, etc.; however, the range of f is preferably 0.99 to 0.7, more preferably 0.95 to 0.8. An f of more than 0.99 results in lower efficiency of catalyst separation and an f of less than 0.7 results in lower treating capability; therefore, such f values are not preferred.

The above-described process of the present invention can be applied to both of a batch process and a continuous process. In order to obtain a polymer for molding, a flushing step, for example, may be adopted to remove the solvent used.

In one preferred embodiment of the present process, the solution of a hydrogenated polymer in an inert solvent, recovered in the above operation is further subjected to filtration to produce a highly purified hydrogenation product of a ring-opening unsaturated hydrocarbon polymer, i.e. a highly purified hydrogenated polymer.

That is, the overflow suspension containing a hydrogenated polymer and having a reduced catalyst concentration is further subjected to a filtration step, whereby it is possible to obtain a highly purified hydrogenated polymer.

In this case, since the overflow suspension containing a hydrogenated polymer and having a reduced catalyst concentration contains a combustible and explosive hydrogen gas, it is preferred to replace the hydrogen gas present in the system, with an inert gas. As the inert gas, there are preferably used, for example, nitrogen gas, argon gas, neon gas and carbon dioxide gas. Then, a suspension of reduced catalyst concentration, substantially free from hydrogen gas is fed to a filtration step.

In the present invention, the filtration is conducted by a per se known method at a predetermined temperature under a predetermined pressure. As to the filter medium used in the filtration, there is no particular restriction as long as the filter medium is not corroded or broken in the filtration. However, as the filter medium, there are preferably used, for example, a membrane filter, a woven fabric filter, a nonwoven fabric filter, a sintered metal filter, a ceramic filter and a filter paper.

The filter medium used in the present invention has a pore diameter of preferably 0.1 to 50 μm, more preferably 0.1 to 10 μm, further preferably 0.1 to 5 μm in terms of the maximum pore diameter as measured by the bubble point test described in JIS K 3832 or ASTM F316-70. When the pore diameter is smaller than 0.1 μm, the pressure drop during the filtration tends to be large; when the pore diameter is larger than 50 μm, it is difficult to obtain a sufficient filtration accuracy; therefore, such pore diameters are not preferred.

In the present invention, the filtration step may be repeated two or more times for a higher filtration accuracy. When the filtration step is repeated two or more times, the second and later filtration steps may be conducted immediately after the first filtration step, and after the flushing step, or in combination thereof. However, in order to remove the particulate contaminants generated during the flushing step, it is preferred to conduct filtration at least once after the flushing step. The filter medium used in the filtration step may be one kind or different kinds. In order to extend the life of the filter medium used and maintain the filtration efficiency of the filter medium used, it is preferred to switch the filter medium gradually from one of larger pore diameter to one of smaller pore diameter.

In the present invention, there is no particular restriction as to the filtration temperature as long as no inconvenience arises in the filtration. However, for minimization of energy loss, it is preferred to conduct the filtration at a temperature close to the temperature used in the replacement of hydrogen gas with an inert gas. Thereby, it is possible to save, in the flushing step conducted successively, the energy added for heating the highly purified solution of a hydrogenated polymer.

Filter aid can also be used in the filtration. The filtration using filter aid is conducted by a per se known method.

In another preferred embodiment of the present process, the solution of a hydrogenated polymer in an inert solvent, recovered in the above operation is further subjected to centrifugation and as necessary a filtration step to produce a highly purified hydrogenated polymer.

That is, the overflow suspension containing a hydrogenated polymer and having a reduced catalyst concentration is subjected to centrifugation and, as necessary, successive filtration using a filter medium, to achieve a higher purity. In this case, as the centrifuge, a per se known equipment is used. Specifically, there are preferably used centrifuges of sedimentation type, such as sedimentation tube type centrifuge, cylinder type centrifuge and separation plate type centrifuge. Thereby, it is possible to remove, prior to the filtration step conducted for removing the fine particles of the heterogeneous catalyst, the heterogeneous catalyst present in the suspension of a hydrogenated polymer and lessen the load of filtration.

Incidentally, in the present invention, it is possible to add, at this stage, additives soluble in the polymer solution, such as stabilizer, ultraviolet absorber and release agent. The addition is made preferably before the filtration or, when the filtration is made a plurality of times, in any step thereof. Such additives, soluble per se, contain external impurities (e.g. dust) as well as insoluble internal impurities; therefore, addition thereof after filtration allows the final product to have a lower purity and is not preferred. There is no particular restriction as to the method of addition; and the additives can be added, for example, in a solid per se, a molten state, a slurry or a solution. Addition in a slurry or a solution is particularly preferred from the operational standpoint.

By conducting solvent removal from the hydrogenated polymer solution obtained, a highly purified hydrogenated polymer can be obtained. As to the method for solvent removal, there is no particular restriction, and a known method can be employed such as flushing method, method of pouring the hydrogenated polymer solution into a non-solvent to give rise to coagulation, or the like. Of these, the flushing method is economical and advantageous because no non-solvent may be used.

The total amount of metals derived from the catalyst in the highly purified hydrogenated polymer obtained is preferably 5 ppm or less, more preferably 3 ppm or less, further preferably 1 ppm or less relative to the polymer. A metal residue of more than 5 ppm is not preferred because the signal characteristic of the optical recording medium produced from such a polymer is inferior. Further, it is not preferred that the hydrogenated polymer contains foreign matter insoluble therein. Such foreign matter refers to catalyst-derived foreign matter and additives (e.g. stabilizer, ultraviolet absorber and release agent)-derived foreign matter. The content of the foreign matter of 0.5 $\mu$m or more in particle diameter, in the highly purified hydrogenated polymer is preferably $3\times10^4$ particles or less per g of polymer, more preferably $2\times10^4$ particles or less per g of polymer, further preferably $1\times10^4$ particles or less per g of polymer. A content of more than $3\times10^4$ particles per g of polymer is not preferred because the signal characteristic of the optical recording medium produced from such a polymer is inferior.

In the present invention, the hydrogen pressure used in the hydrogenation reaction is utilized in introducing a ring-containing saturated (co)polymer containing a heterogeneous catalyst, into a hydro-cyclone; therefore, no slurry pump of high lift head is required. Thus, the biggest drawback of hydro-cyclone can be made up for. Hence, the present invention is useful as a process which can produce a suspension of a hydrogenated polymer, greatly reduced in heterogeneous catalyst content, at a low production cost using a trouble-scarce equipment.

Examples

The present invention is described below by way of Examples. However, the present invention is in no way restricted by these Examples.

Incidentally, the raw materials, measurement methods, apparatuses, etc. used in the Examples are as follows.

<Polymer raw materials, catalysts, solvents, etc.>

Cyclohexane and styrene were used each by subjecting to distillation, purification and thorough drying. As polystyrene, a polystyrene "GP158" produced by BASF Co. was used as it is. As Ni/silica-alumina catalyst (loaded Ni content: 65%), a catalyst purchased from Aldrich Co. was used as it is. As Pt/silica catalyst (loaded Pt content: 10%, mass base median diameter: 22 $\mu$m), a trial production catalyst was used. Toluene and 8-ethylidenetetracyclo[$4.4.0.1^{2,5}.1^{7,10}$]-3-dodecene were used each by subjecting to distillation, purification and thorough drying by ordinary methods. As triisobutyl aluminum, its 2 M toluene solution purchased from Toso-Akzo Corporation was used as it is. As titanium tetrachloride, a product purchased form Wako Pure Chemical Industries, Ltd. was used as it is.

In the Examples, measurements of properties were made as follows.

a) Glass transition temperature (Tg):

Glass transition temperature was measured at a temperature elevation rate of 20°C/min using 2920 DSC produced by TA Instruments.

b) Hydrogenation degree:

Hydrogenation degree was determined by $^1$H-NMR using a nuclear magnetic resonance spectrometer, JEOL JNM-A-400.

c) Reduced viscosity:

A reduced viscosity [$\eta$sp/C (dL/g)] at 30°C, of a toluene solution containing 0.5 g/dL of a polymer was measured.

d) Residual metal concentration in polymer:

Residual metal concentration was quantitatively determined by ICP emission spectral analysis.

e) Total light transmittance:

Total light transmittance was measured using an ultraviolet-visible light spectrometer (UV-240) produced by Shimadzu Corporation.

f) True density of catalyst:

True density of catalyst was determined by a suspension method.

g) Apparent density of catalyst:

A catalyst (density $\rho c$) of a given amount (Wc) was allowed to occlude cyclohexane (density $\rho s = 0.78$ g/cm$^3$), and the amount (Ws) of cyclohexane occluded was measured. From this data, the porosity of the catalyst was calculated from (Ws/$\rho s$)/(Wc/$\rho c$ + Ws/$\rho s$). Then, using this porosity and the density of the hydrogenated ring-containing unsaturated hydrocarbon polymer solution used, the apparent density of the catalyst was determined.

h) Catalyst concentration in separated suspension (separation efficiency):

An overflow suspension or an underflow suspension was subjected to pressure filtration using a membrane filter of 1 $\mu$m diameter in mesh; the resulting cake was sufficiently washed with cyclohexane and weighed; then, the catalyst concentration in the suspension was calculated.

i) Density of solution of hydrogenation product of ring-containing hydrocarbon polymer, i.e. hydrogenated polymer:

The density was determined, by extrapolation, from the density at a temperature not higher than the boiling point of the solvent used.

j) Hydro-cyclone used:

A hydro-cyclone shown in Fig. 5 was used.

k) Content of foreign matter:

The content was determined by dissolution of a polymer in cyclohexane and subsequent measurement using a light-scattering type particle counter.

l) Mass base median diameter of catalyst:

A catalyst was suspended in cyclohexane, and measurement was made using a laser diffraction-scattering type grain size distribution tester.

Example 1

The inside of a 10-liter stainless steel-made autoclave with an agitating element was dried sufficiently and replaced with nitrogen. Thereinto were fed 750 g of a polystyrene, 118 g of a Pt/silica catalyst (apparent density: 1.08 g/cm$^3$, mass base median diameter: 22 $\mu$m) and 3,700 g of cyclohexane. Successively, the inside of the reactor was replaced sufficiently with hydrogen. Then, a hydrogenation reaction was conducted, with stirring, at a hydrogen pressure of 100 kgf/cm$^2$ at 180°C for 6 hours.
The original suspension of hydrogenated polystyrene obtained was introduced into a hydro-cyclone (Fig. 5) kept at 180°C, at a hydrogen pressure of 12 kgf/cm$^2$. At that time, valves fitted at the overflow suspension outlet and the underflow suspension outlet were controlled so as to give a mass base flow amount ratio f of 0.75. The overflow suspension was almost transparent. In contrast, the underflow suspension was a highly concentrated blackish brown suspension. The separation efficiency determined from the ratio of the catalyst amount contained in the underflow suspension, to the catalyst amount contained in the original suspension was 99.1% by weight.
The overflow suspension was subjected to pressure filtration using a 0.1-$\mu$m (pore diameter) membrane filter ("Fluoropore" produced by Sumitomo Electric Industries, Ltd.). As a result, a colorless transparent hydrogenated styrene polymer solution was obtained. The solution had a density of 0.55 g/cm$^3$ and a viscosity of 4 cps, at the operating temperature (180°C) of the hydro-cyclone.
The hydrogenated styrene polymer solution was taken by a small amount and poured into a large amount of ethanol to obtain a white precipitate. The precipitate was collected by filtration and dried to obtain a hydrogenated styrene polymer. The polymer showed a hydrogenation degree of 99.3% as measured by $^1$H-NMR and a reduced viscosity $\eta$sp/C of 0.47 dL/g. As to the residual metal content in the polymer as measured by ICP emission spectral analysis, the Pt content was 0.1 ppm or less and the Si content was 0.23 ppm, and the polymer was highly purified.
The content of foreign matter having a particle diameter of 0.5 $\mu$m or larger as measured by a light scattering method was 0.82x10$^4$ particles per g of polymer, and the polymer was highly purified.

Example 2

The original suspension of hydrogenated polystyrene, obtained in Example 1 was introduced into a hydro-cyclone (Fig. 5) maintained at 180°C, at a hydrogen pressure of 12 kgf/cm². At that time, the mass base flow amount ratio f was controlled at 0.92. The overflow suspension was almost transparent. The underflow suspension was a blackish brown concentrated suspension. The separation efficiency was 96.5% by weight.

The overflow suspension was subjected to pressure filtration using a 0.1-μm (pore diameter) membrane filter ("Fluoropore" produced by Sumitomo Electric Industries, Ltd.). As a result, a colorless, transparent, hydrogenated styrene polymer solution was obtained.

Part of the hydrogenated styrene polymer solution was poured into a large amount of ethanol. The resulting precipitate was collected by filtration and dried to obtain white flakes of a hydrogenated styrene polymer. The polymer showed a hydrogenation degree of 99.4% as measured by $^1$H-NMR and a reduced viscosity ηsp/C of 0.47 dL/g. As to the residual metal content in the polymer as measured by ICP emission spectral analysis, the Pt content was 0.1 ppm or less and the Si content was 0.25 ppm, and the polymer was highly purified. The polymer had a glass transition temperature of 149°C as measured by DSC.

The content of foreign matter having a particle diameter of 0.5 μm or larger as measured by a light scattering method was 0.82x10⁴ particles per g of polymer, and the polymer was highly purified.

Example 3

Into a 10-liter stainless steel-made reactor were fed 855 g of 8-ethylidenetetracyclo[4.4.0.1²,⁵.1⁷,¹⁰]-3-dodecene, 3,300 g of toluene, 12.6 g of 1-hexene, 22.5 g of triethylamine and 45 g of triisobutyl aluminum. Further, 8.4 g of titanium tetrachloride was fed. The resulting mixture was subjected to a polymerization reaction at -10°C for 2 hours to obtain a solution of a ring-opening polymer. The polymer solution was taken by a small amount and purified by an ordinary method to obtain a polymer. The polymer had a reduced viscosity ηsp/C of 0.65 dL/g and a glass transition temperature (Tg) of 186°C as measured by DSC.

To the polymer solution obtained above were added 23.4 g of lactic acid and 3.0 g of water at 100°C with stirring. The resulting mixture was subjected to a reaction at the same temperature for 2 hours. The mixture changed from a blackish brown mixture to a black cloudy slurry. The slurry was filtered. The resulting filtrate was subjected to an adsorption treatment using a basic alumina, to obtain a colorless solution. The solution was poured into a large amount of ethanol. The resulting precipitate was collected by filtration and dried to obtain a flaky, colorless, ring-opening unsaturated polymer.

3,300 g of the flaky ring-opening unsaturated cyclic polymer was dissolved in toluene. To the resulting solution was added 125 g of a Ni/silica-alumina catalyst. The resulting mixture was stirred at 150°C for 6 hours at a hydrogen pressure of 100 kgf/cm².

The original suspension of hydrogenated ring-opening polymer obtained was introduced into a hydro-cyclone (Fig. 5) maintained at 150°C, at a hydrogen pressure of 12 kgf/cm². At that time, the mass base flow amount ratio f was controlled at 0.90. The overflow suspension was almost transparent. In contrast, the underflow suspension was a highly concentrated black suspension. The separation efficiency was 98.0% by weight.

The overflow suspension was subjected to pressure filtration using a membrane filter of 0.1 μm in pore diameter, to obtain a colorless transparent solution of a hydrogenated ring-opening polymer. The polymer solution was taken by a small amount and purified by an ordinary method to obtain a polymer. The polymer had a hydrogenation degree of 99.9% or more as measured by $^1$H-NMR, a reduced viscosity ηsp/C of 0.53 dL/g, and a Tg of 140°C as measured by DSC. As to the residual metal content in the polymer as measured by ICP emission spectral analysis, the Ni content was 0.18 ppm, the Al content was 0.28 ppm and the Si content was 0.23 ppm, and the polymer was highly purified.

Example 4

The inside of a 10-liter stainless steel-made autoclave with an agitating element was dried sufficiently and replaced with nitrogen. Thereinto were fed 750 g of a polystyrene, 118 g of a Pt/silica catalyst (apparent density: 1.08 g/cm³, mass base median diameter: 22 μm) and 3,700 g of cyclohexane. Successively, the inside of the reactor was replaced sufficiently with hydrogen. Then, a hydrogenation reaction was conducted, with stirring, at a hydrogen pressure of 100 kgf/cm² at 180°C for 6 hours.

80% of the original suspension of hydrogenated polystyrene obtained was introduced into a hydro-cyclone for catalyst cycle, maintained at 180°C, at a hydrogen pressure of 12 kgf/cm². At that time, valves fitted at the overflow suspension outlet and the underflow suspension outlet were controlled so as to give a mass base flow amount ratio f of 0.75. The overflow suspension was almost transparent. The overflow suspension was subjected to pressure reduction and then fed to a filtration step. Meanwhile, the underflow suspension was subjected to pressure reduction and then returned to the autoclave. The separation efficiency determined from the catalyst concentration in the overflow suspension and the catalyst concentration in the original suspension (the percentage of the catalyst amount contained in the underflow suspension, to the catalyst amount contained in the original suspension) was 99.1%.

The remaining 20% of the original suspension of hydrogenated polystyrene was subjected to pressure reduction and then introduced into a hydro-cyclone for catalyst activation, maintained at 180°C, at a hydrogen pressure of 12 kgf/cm$^2$. At that time, the mass base flow amount ratio f was controlled at 0.75. The overflow suspension was almost transparent. The overflow suspension was subjected to pressure reduction and then fed to a filtration step. The underflow suspension was not activated or regenerated; instead, a catalyst of an amount corresponding to that of the underflow suspension was introduced into the autoclave. The separation efficiency was 99.0%. 612 g of a fresh polystyrene and 3,018 g of fresh cyclohexane were added for use in the next (second) hydrogenation reaction.

The overflow suspensions separated in the cyclone for catalyst cycle and the cyclone for catalyst activation were combined and subjected to pressure filtration using a membrane filter of 0.1 μm in pore diameter ("Fluoropore" produced by Sumitomo Electric Industries, Ltd.). As a result, a colorless transparent solution of a hydrogenated styrene polymer was obtained. The solution had a density of 0.55 g/cm$^3$ and a viscosity of 4 cps, at the hydro-cyclone operating temperature (180°C). The hydrogenated styrene polymer solution was taken by a small amount and poured into a large amount of ethanol to obtain a white precipitate. The precipitate was collected by filtration and dried to obtain a hydrogenated styrene polymer. The polymer had a hydrogenation degree of 99.7% as measured by $^1$H-NMR and a reduced viscosity ηsp/C of 0.48 dL/g. As to the residual metal content in the polymer as measured by ICP emission spectral analysis, the Pt content was 0.1 ppm or less and the Si content was 0.25 ppm, and the polymer was highly purified.

The above operation was repeated five times. The hydrogenated polystyrene obtained in the fifth operation had a hydrogenation degree of 99.7% and a reduced viscosity ηsp/C of 0.48 dL/g. Thus, there was no deterioration in quality.

The thus-obtained solution of a hydrogenated styrene polymer was subjected to a flushing step to produce pellets of a hydrogenated polymer. The pellets were subjected to injection molding under the conditions of cylinder temperature = 300°C and die temperature = 75°C. As a result, a transparent molded material of 2 mm in thickness was obtained. The molded material had a transmittance of 91% and was highly transparent.

Example 5

The inside of a 10-liter stainless steel-made autoclave with an agitating element was dried sufficiently and replaced with nitrogen. Thereinto were fed 750 g of a polystyrene, 118 g of a Pt/silica catalyst (apparent density: 1.08 g/cm$^3$, mass base median diameter: 22 μm) and 3,700 g of cyclohexane. Successively, the inside of the reactor was replaced sufficiently with hydrogen. Then, a hydrogenation reaction was conducted, with stirring, at a hydrogen pressure of 100 kgf/cm$^2$ at 180°C for 6 hours.

A total of the original suspension of hydrogenated polystyrene obtained was introduced into a hydro-cyclone (Fig. 5) maintained at 180°C, at a hydrogen pressure of 12 kgf/cm$^2$. At that time, valves fitted at the overflow suspension outlet and the underflow suspension outlet were controlled so as to give a mass base flow amount ratio f of 0.75. The overflow suspension was almost transparent. The overflow suspension was subjected to pressure reduction and then fed to a filtration step. Meanwhile, the underflow suspension was returned to the autoclave as it is. The separation efficiency determined from the catalyst concentration in the overflow suspension and the catalyst concentration in the original suspension (the percentage of the catalyst amount contained in the underflow suspension, to the catalyst amount contained in the original suspension) was 99.0%. 577 g of a fresh polystyrene, 2,847 g of fresh cyclohexane and a catalyst of a small amount corresponding to the catalyst amount in the overflow suspension were added for use in the next (second) hydrogenation reaction.

The overflow suspension separated in the hydro-cyclone was subjected to pressure filtration using a membrane filter of 0.1 μm in pore diameter ("Fluoropore" produced by Sumitomo Electric Industries, Ltd.). As a result, a colorless transparent solution of a hydrogenated styrene polymer was obtained. The solution had a density of 0.55 g/cm$^3$ and a viscosity of 4 cps, at the hydro-cyclone operating temperature (180°C). The hydrogenated styrene polymer solution was taken by a small amount and poured into a large amount of ethanol to obtain a white precipitate. The precipitate was collected by filtration and dried to obtain a hydrogenated styrene polymer. The polymer had a hydrogenation degree of 99.0% as measured by $^1$H-NMR and a reduced viscosity ηsp/C of 0.48 dL/g. As to the residual metal content in the polymer as measured by ICP emission spectral analysis, the Pt content was 0.1 ppm or less and the Si content was 0.26 ppm, and the polymer was highly purified.

The above operation was repeated five times. The hydrogenated polystyrene obtained in the fifth operation had a hydrogenation degree of 84%.

Example 6

Into a 1-m$^3$ stainless steel-made reactor were fed 85.5 kg of 8-ethylidenetetracyclo[4.4.0.1$^{2,5}$.1$^{7,10}$]-3-dodecene, 330 kg of toluene, 1.26 kg of 1-hexene, 2.25 kg of triethylamine and 4.5 kg of triisobutyl aluminum. Further, 0.84 kg of titanium tetrachloride was fed. The resulting mixture was subjected to a polymerization reaction at -10°C for 2 hours to obtain a solution of a ring-opening polymer. The polymer solution was taken by a small amount and purified by an ordinary method to obtain a polymer. The polymer had a reduced viscosity $\eta sp/C$ of 0.65 dL/g and a glass transition temperature (Tg) of 186°C as measured by DSC.

To the above-obtained solution were added 2.34 kg of lactic acid and 0.3 kg of water at 100°C with stirring. The resulting mixture was subjected to a reaction at the same temperature for 2 hours. The mixture changed from a blackish brown mixture to a black cloudy slurry. The slurry was filtered. The resulting filtrate was subjected to an adsorption treatment using a basic alumina, to obtain a colorless solution. The solution was poured into a large amount of ethanol. The resulting precipitate was collected by filtration and dried to obtain a flaky, colorless, ring-opening unsaturated polymer.

There was prepared a suspension for hydrogenation reaction, containing 70 kg of the flaky, ring-opening unsaturated cyclic polymer, 10.5 kg of a Ni/silica-alumina catalyst and 280 kg of cyclohexane. The suspension was fed into a hydrogenation tank of 1 m$^3$. The suspension was also fed into an agitation tank. A continuous hydrogenation reaction was conducted at a hydrogen pressure of 100 kgf/cm$^2$ at 150°C. At that time, the suspension after hydrogenation reaction was continuously withdrawn as an original suspension from the hydrogenation tank, at a rate of 3 kg/min; and the suspension for hydrogenation reaction (a suspension of a ring-opening polymer) of an amount corresponding to the amount of the withdrawn suspension after hydrogenation reaction was introduced from the agitation tank into the hydrogenation tank at a rate of 3 kg/min. Into the agitation tank was continuously fed a solution containing 20% by weight of the ring-opening unsaturated cyclic polymer, of an amount corresponding to the amount of the suspension introduced from the agitation tank into the hydrogenation tank.

The original suspension withdrawn from the hydrogenation tank was continuously introduced, at a hydrogen pressure of 12 kgf/cm$^2$, into a hydro-cyclone for catalyst cycle and a hydro-cyclone for catalyst activation both maintained at 150°C, at a flow amount ratio of 50:50. At that time, the mass base flow amount ratios f of the cyclones were controlled each at 0.90. Of the suspension fed into the cyclone for catalyst cycle, the overflow suspension was subjected to pressure reduction, then taken out as an almost transparent suspension, subjected to pressure reduction, and fed to a filtration step. Meanwhile, the underflow suspension was continuously fed into the agitation tank 1.

Meanwhile, of the suspension fed into the hydro-cyclone for catalyst activation, the overflow suspension was subjected to pressure reduction and then fed to a filtration step as an almost transparent suspension. The catalyst of the underflow suspension and a catalyst of an amount corresponding to the catalyst fed to the filtration step were continuously fed into the agitation tank 1. A continuous hydrogenation reaction was conducted in this manner.

The catalyst separation efficiencies in the hydro-cyclone for catalyst cycle and the hydro-cyclone for catalyst activation were each 98.0%.

The overflow suspensions separated were subjected to pressure filtration using a membrane filter of 0.1 μm in pore diameter to obtain a colorless transparent solution of a hydrogenated ring-opening polymer. A sample 1 was taken when the continuous reaction had become a steady state, and a sample 2 was taken 20 hours after the continuos reaction had become a steady state. The samples 1 and 2 were analyzed. The samples 1 and 2 were purified by an ordinary method and the resulting polymers each showed a hydrogenation degree of 99.5% or more as measured from the $^1$H-NMR spectrum, a reduced viscosity $\eta sp/C$ of 0.53 dL/g, and a Tg of 140°C as measured by DSC. Thus, the hydrogenated ring-opening unsaturated cyclic polymer obtained by the present continuos reaction was very stable in quality. The above-obtained polymer solution was subjected o a flushing step to produce pellets. The pellets were subjected to injection molding at a cylinder temperature of 300°C at a die temperature of 75°C to obtain a transparent plate of 2 mm in thickness. The transparent plate had a transmittance of 91%, and a very high transparency was confirmed.

## Claims

1. A process for producing a hydrogenated polymer, which comprises subjecting a ring-containing unsaturated hydrocarbon polymer containing, in the main recurring unit, at least one aliphatic carbon-carbon double bond and/or at least one aromatic hydrocarbon group, to a hydrogenation reaction under a hydrogen pressure in the presence of a heterogeneous catalyst in an inert solvent, feeding, by the hydrogen pressure used in the hydrogenation reaction, a suspension containing the obtained hydrogenated polymer and the heterogeneous catalyst into a hydro-cyclone, and separating and recovering, in the hydro-cyclone, the heterogeneous catalyst from the suspension and recovering the hydrogenated polymer in the form of a solution in the inert solvent.

2. A process according to Claim 1, wherein at least part of the recovered heterogeneous catalyst is circulated and used as a heterogeneous catalyst for hydrogenation reaction.

3. A process according to Claim 1, wherein at least part of the recovered heterogeneous catalyst is activated and used as a heterogeneous catalyst for hydrogenation reaction.

4. A process according to Claim 1, wherein a suspension of raw materials for hydrogenation reaction, comprising the ring-containing unsaturated hydrocarbon polymer, the heterogeneous catalyst and the inter solvent is prepared in an agitator, the suspension is transferred into a hydrogenation reactor to give rise to a hydrogenation reaction, and the heterogeneous catalyst separated and recovered in the hydro-cyclone is, per se or after being activated, circulated and used as part of the heterogeneous catalyst for preparation of the suspension of raw materials.

5. A process according to Claim 1, wherein the ring-containing unsaturated hydrocarbon polymer is an addition polymer of a cyclic diene and an $\alpha$-olefin.

6. A process according to Claim 1, wherein the ring-containing unsaturated hydrocarbon polymer is a ring-opening polymer of a cyclic olefin.

7. A process according to Claim 1, wherein the ring-containing unsaturated hydrocarbon polymer is a styrene polymer.

8. A process according to Claim 1, wherein the heterogeneous catalyst is at least one metal selected from the group consisting of nickel, platinum, palladium, ruthenium and rhodium, an oxide thereof, a salt thereof, or a complex thereof.

9. A process according to Claim 1, wherein the heterogeneous catalyst is a solid catalyst carried, on a porous carrier, at least one metal selected from the group consisting of nickel, platinum, palladium, ruthenium and rhodium, an oxide thereof, a salt thereof, or a complex thereof.

10. A process according to Claim 1, wherein the heterogeneous catalyst has a mass base median diameter of 1 $\mu$m or more.

11. A process according to Claim 1, wherein the difference between the true density of the heterogeneous catalyst and the density of the solution of the hydrogenated polymer in the inert solvent, or, when the heterogeneous catalyst is a solid catalyst carried a catalyst component on a porous carrier, the difference between the density (apparent density) of the solid catalyst when the weight of the solution penetrated into the pores of the porous carrier has also been taken into consideration and the density of the solution of the hydrogenated polymer in the inert solvent, is 0.01 g/cm$^3$ or more.

12. A process according to Claim 1, wherein the weight base concentration of the heterogeneous catalyst in the suspension is 60% by weight or less.

13. A process according to Claim 1, wherein the solution of the hydrogenated polymer in the inert solvent has a viscosity of 500 cps or less.

14. A process according to Claim 1, wherein the hydro-cyclone is a cone-shaped hydro-cyclone comprising a cylindrical section and a conical section.

15. A process according to Claim 14, wherein the cylindrical section of the cone-shaped hydro-cyclone has a diameter (Dc) of 10 mm to 500 mm.

16. A process according to Claim 14, wherein the conical section of the cone-shaped hydro-cyclone has a vertex angle ($\theta$) of 6° to 40°.

17. A process according to Claim 14, wherein the cylindrical section of the cone-shaped hydro-cyclone is divided into an upper cylindrical section and a lower cylindrical section via a connecting section and the lower cylindrical section has a length (L$_1$) of 0.5Dc to 5Dc.

18. A process according to Claim 14, wherein the cone-shaped hydro-cyclone is operated so that, when the mass base flow amounts (kg/hr) of the overflow suspension and the underflow suspension are expressed as V$_1$ and V$_2$ respectively, the ratio of the mass base flow amounts, i.e. f = V$_1$/(V$_1$+V$_2$) becomes 0.99 to 0.7.

19. A process according to Claim 1, wherein the suspension is fed into the hydro-cyclone at a hydrogen pressure of 0.5 kgf/cm$^2$ to 250 kgf/cm$^2$.

20. A process according to Claim 1, wherein at least 70% by weight of the amount of the heterogeneous catalyst contained in the suspension is separated and recovered in the hydro-cyclone.

21. A process according to Claim 1, wherein the recovered solution of the hydrogenated polymer in the inert solvent is subjected to filtration.

22. A process according to Claim 21, wherein the filter medium used in the filtration has a pore diameter of 0.1 to 50 $\mu$m in terms of the maximum pore diameter as measured by the bubble point test.

23. A process according to Claim 1, wherein the recovered solution of the hydrogenated polymer in the inert solvent is subjected to centrifugation and, as necessary, filtration.

24. A process according to any of Claims 21 to 23, wherein the content of metals derived from the heterogeneous catalyst in the hydrogenated polymer obtained is in an amount of 5 ppm or less.

25. A process according to any of Claims 21 to 23, wherein the content of foreign matter of 0.5 µm or more in particle diameter in the hydrogenated polymer obtained is by $2\times10^4$ particles or less per g of the polymer.

26. A hydrogenated polymer obtained by a process set forth in any of Claims 21 to 23.

FIG. 1

F I G. 2

F I G. 3

(a)

(b)

F I G. 4

F I G. 5

Production process

```
┌────────────────────────────────────┐
│ Suspension of ring-containing       │
│ unsaturated hydrocarbon polymer     │
└────────────────────────────────────┘

┌ ─ ─ ─ ─ ─ ─ ─ ─ ─ ─ ─ ─ ┐
  Heterogeneous catalyst
└ ─ ─ ─ ─ ─ ─ ─ ─ ─ ─ ─ ─ ┘

        ┌──────────────────────────┐
        │  Hydrogenation reaction  │
        └──────────────────────────┘

┌────────────────────────────────────────┐
│ Suspension of hydrogenated, ring-        │
│ containing unsaturated hydrocarbon       │
│ polymer                                  │
└────────────────────────────────────────┘

┌──────────────────────────────┐
│  Catalyst activation step    │
└──────────────────────────────┘

        ┌──────────────────────────┐
        │  Separation and recovery  │
        │  of heterogeneous catalyst│
        │  (liquid cyclone)         │
        └──────────────────────────┘

┌ ─ ─ ─ ─ ─ ─ ─ ─ ─ ─ ─ ┐        ┌ ─ ─ ─ ─ ─ ─ ─ ─ ─ ─ ─ ┐
  Heterogeneous catalyst           Heterogeneous catalyst
└ ─ ─ ─ ─ ─ ─ ─ ─ ─ ─ ─ ┘        └ ─ ─ ─ ─ ─ ─ ─ ─ ─ ─ ─ ┘

        ┌──────────────────────────────────┐
        │ Suspension of hydrogenated,       │
        │ ring-containing unsaturated       │
        │ hydrocarbon polymer, low and      │
        │ uniform in catalyst concentration │
        └──────────────────────────────────┘

                ┌────────────────────┐
                │  Filtration step   │
                └────────────────────┘

┌ ─ ─ ─ ─ ─ ─ ─ ─ ─ ─ ─ ┐        ┌ ─ ─ ─ ─ ─ ─ ─ ─ ─ ─ ─ ┐
  Heterogeneous catalyst           Heterogeneous catalyst
└ ─ ─ ─ ─ ─ ─ ─ ─ ─ ─ ─ ┘        └ ─ ─ ─ ─ ─ ─ ─ ─ ─ ─ ─ ┘

                ┌──────────────┐
                │   Product    │
                └──────────────┘
```

F I G. 6

## INTERNATIONAL SEARCH REPORT

| International application No. |
|---|
| PCT/JP01/01511 |

**A. CLASSIFICATION OF SUBJECT MATTER**
Int.Cl$^7$ C08F8/04, C08F232/00, C08G61/06

According to International Patent Classification (IPC) or to both national classification and IPC

**B. FIELDS SEARCHED**

Minimum documentation searched (classification system followed by classification symbols)
Int.Cl$^7$ C08F8/04, C08F232/00, C08G61/06

Documentation searched other than minimum documentation to the extent that such documents are included in the fields searched

Electronic data base consulted during the international search (name of data base and, where practicable, search terms used)
WPI(L)

**C. DOCUMENTS CONSIDERED TO BE RELEVANT**

| Category* | Citation of document, with indication, where appropriate, of the relevant passages | Relevant to claim No. |
|---|---|---|
| X | US, 5462995, A (Nippon Zeon Co., Ltd.), 31 October, 1995 (31.10.95), | 26 |
| A | Claims & JP, 4-363312, A Claims & EP, 589041, A1 | 1-25 |
| X | US, 4595749, A (Shell Oil Company), 17 June, 1986 (17.06.86), | 26 |
| A | Claims & JP, 61-130304, A Claims & EP, 186918, A2 | 1-25 |

☐ Further documents are listed in the continuation of Box C.    ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search 01 May, 2001 (01.05.01) | Date of mailing of the international search report 22 May, 2001 (22.05.01) |
|---|---|
| Name and mailing address of the ISA/ Japanese Patent Office | Authorized officer |
| Facsimile No. | Telephone No. |

Form PCT/ISA/210 (second sheet) (July 1992)